# EUROPÄISCHE PATENTSCHRIFT

(11) **EP 1 498 761 B1**
(45) Veröffentlichungstag und Bekanntmachung des Hinweises auf die Patenterteilung: **10.10.2007**
(21) Anmeldenummer: 04016740.5
(22) Anmeldetag: 15.07.2004
(51) Int. Cl.: G02B 21/22

(54) **Stereomikroskop**
Stereo microscope
Microscope stéreoscopique

(30) Priorität: 17.07.2003 DE 10332603
(43) Veröffentlichungstag der Anmeldung: 19.01.2005
(73) Patentinhaber: Leica Microsystems (Schweiz) AG, 9435 Heerbrugg (CH)
(72) Erfinder: Sander, Ulrich, 9445 Rebstein (CH)
(74) Vertreter: Hössle Kudlek & Partner

(56) Entgegenhaltungen:
- EP-A- 1 191 381
- EP-A- 1 227 355
- WO-A-02/27379
- GB-A- 2 295 027

## Beschreibung

Die vorliegende Erfindung betrifft ein Stereomikroskop nach dem Oberbegriff des Patentanspruchs 1.

Ophthalmologische Mikroskope sind an sich bekannt. Sie weisen ein Hauptobjektiv, ein diesem nachgeschaltetes Vergrößerungssystem und ein Binokularsystem mit Okularen auf. Zur Bereitstellung eines Stereomikroskops kann in einem beispielsweise als Zoom-System ausgestalteten Vergrößerungssystem eine Aufspaltung des das Hauptobjektiv durchsetzenden Strahlengangs in eine Anzahl von Strahlengängen durchgeführt werden. Ferner sind ophthalmologische Mikroskope bekannt, welche eine simultane Betrachtung des Objektes durch einen ersten Benutzer (Hauptoperateur) und einen zweiten Benutzer (Assistent) gestatten.

Für die Intraokulare Chirurgie, beispielsweise um den Fundus oder fundusnahe Glaskörperbereiche eines menschlichen Auges mikroskopisch betrachten zu können, werden Zusatzoptiken an den Stereomikroskopen benötigt. Diese bestehen aus Linsen, die dem Hauptobjektiv (objektseitig) vorgeschaltet sind.

In dem Prospekt "SDI II, BIOM II" der Oculus Optikgeräte GmbH aus dem Jahre 1998 sowie der US 4,856,872 ist eine derartige Zusatzoptik beschrieben. Diese Zusatzoptik weist eine nah am zu beobachtenden Objekt anzuordnende Linse (bphthalmoskopierlinse) und eine näher am Hauptobjektiv angeordnete Linse (Reduktionslinse) auf.

Aus der DE 41 14 646 C2 ist eine Lösung bekannt, bei der ein Ophthalmologievorsatz für ein Operationsmikroskop in einem Vorsatzgehäuse untergebracht ist, welches bezüglich des Hauptobjektivs seitlich positionierbar ist. Der Vorsatz weist eine Ophthalmoskopierlinse, ein optisches System zur Bildaufrichtung und eine verschiebbare Linse (Korrekturlinse) zur Fokussierung auf.

Das System zur Bildaufrichtung wird benötigt, da die Zusatzoptiken das Mikroskopbild höhen- und seitenverkehrt und damit in der Beobachtung pseudostereoskopisch abbilden. Dies bedeutet unter anderem, dass bei dem durch die Ophthalmoskopierlinse erzeugten Zwischenbild in der Tiefenwahrnehmung vorne und hinten vertauscht ist. Um mikrochirurgisch arbeiten zu können, ist aber ein aufgerichtetes, stereoskopisch richtiges Bild erforderlich. Gleichzeitig mit der notwendigen Bildaufrichtung muss daher im Operationsmikroskop eine Vertauschung der beiden Beobachtungsstrahlengänge (Pupillenvertauschung) erfolgen, um bei der stereoskopischen Betrachtung den ansonsten auftretenden Pseudo-Stereoeffekt zu vermeiden. Eine besonders bevorzugte Ausführungsform eines derartigen optischen Systems zur Bildaufrichtung ist als SDI-System (Stereoskopischer Diagonal-Inverter) bekannt. Ein derartiges System ist beispielsweise aus dem bereits erwähnten Prospekt "SDI II, BIOM II" aus dem Jahre 1998 bekannt. Die Verwendung derartiger SDI-Systeme ist jedoch mit erheblichen Nachteilen für das Mikroskopsystem bzw. die Bildqualität des Mikroskops verbunden. Insbesondere erweist es sich als sehr aufwändig, den optischen Strahlengang dieser Zusatzsysteme mit denjenigen eines Stereomikroskops anzupassen. Das Ergebnis ist oftmals mangelnde Bildqualität sowie ein Feldbeschnitt, der durch unzureichende mechanische Anpassung des SDI-Systems an das Mikroskop hervorgerufen wird. Ferner verschlechtert die Bauhöhe derartiger SDI-Systeme die ergonomische Bauhöhe des Mikroskops.

Ein gattungsgemäßes Stereomikroskop ist aus der EP-A-1 191 381 bekannt. Das dort beschriebene Mikroskop verwendet als Invertersystem eine Prismenanordnung.

Die GB-A-2 295 027 beschreibt mit Brechkraft ausgebildete optische Elemente, wie etwa Hohlspiegel, mittels derer optische Bilder invertiert werden können. Diese Druckschrift bezieht sich jedoch nicht auf eine Vertauschung von Strahlengängen im Rahmen der Stereomikroskopie.

Die vorliegende Erfindung strebt an, im Rahmen eines Stereomikroskops eine seitenverkehrte und pseudostereoskopische Abbildung in möglichst einfacher Weise wieder zu invertieren, d. h. seitenrichtig und stereoskopisch abzubilden.

Dieses Ziel wird erreicht mit einem Stereomikroskop mit den Merkmalen des Patentanspruchs 1.

Mit der erfindungsgemäßen Maßnahme, ein optisches Inverter-System zur Aufrichtung und Beobachtungsstrahlvertauschung eines pseudo-stereoskopischen Bildes wenigstens mit einem eine Brechkraft aufweisenden Umlenkelement auszubilden, wobei das Invertersystem einem eine erste optische Achse definierenden Hauptobjektiv nachgeordnet ist,
ist es in einfacher Weise möglich, die Bauhöhe des Stereomikroskops gegenüber herkömmlichen Lösungen zu verkleinern. Somit ist auch die ergonomische Bauhöhe des Mikroskopes in vorteilhafter Weise verkleinerbar.

Vorteilhafte Ausführungsformen des erfindungsgemäßen Stereomikroskops sind Gegenstand der Unteransprüche.

Zweckmäßigerweise weist das Stereomikroskop zwei mit einer Brechkraft ausgebildete Umlenkelemente auf. Hierdurch ist es beispielsweise möglich, einen auf das erste Umlenkelement auftreffenden, insbesondere horizontal verlaufenden Strahlengang zunächst in die Senkrechte umzulenken, und anschließend, durch eine weitere Umlenkung an dem zweiten Umlenkelement, einen im wesentlichen zum ursprünglichen horizontalen Strahlengang parallel verlaufenden Strahlengang zu erzeugen. Ein seiten- und höhenrichtiges Bild wird hierbei entlang des zwischen den beiden Mikroskopebenen senkrecht verlaufenden Strahlenganges erzeugt. Somit kann dieser senkrecht verlaufende Strahlengang optimal genutzt werden. Hierdurch lässt sich die Baugröße eines Stereomikroskops sehr klein halten bzw. ein zur Verfügung stehender Bauraum optimal ausnutzen.

Gemäß einer besonders bevorzugten Ausführungsform des erfindungsgemäßen Stereomikroskops ist wenigstens ein Umlenkelement des Inverter-Systems als Hohlspiegel ausgebildet. Hohlspiegel sind in einfacher und preiswerter Weise bereitstellbar, und können ferner in sehr unaufwändiger Weise justiert werden. Es ist ebenfalls denkbar, als Umlenkelemente mit einer Brechkraft ausgebildete Umlenkprismen zu verwenden.

Zweckmäßigerweise weist das erfindungsgemäße Stereomikroskop Umlenkelemente zum Umlenken eines parallel zu der ersten optischen Achse verlaufenden Strahlenganges entlang einer zweiten optischen Achse in eine erste Mikroskopebene, welche sich unter einem Winkel, insbesondere im wesentlichen senkrecht zu der ersten optischen Achse erstreckt, und anschließend entlang einer dritten optischen Achse in eine zweite Mikroskopebene, welche sich im wesentlichen parallel zu der ersten Mikroskopebene oberhalb von dieser erstreckt, auf. Ein derart aufgebautes Stereomikroskop baut gegenüber herkömmlichen Lösungen sehr klein, da ein Grossteil der notwendigen bzw. zweckmäßigen optischen Komponenten in den ersten und zweiten Mikroskopebenen, welche vorteilhafterweise horizontal verlaufen, vorgesehen sein kann.

Gemäß einer weiteren bevorzugten Ausgestaltung des erfindungsgemäßen Stereomikroskops weist dieses ein in der ersten oder zweiten Mikroskopebene entlang der zweiten bzw. dritten optischen Achse ausgebildetes, wenigstens zwei stereoskopische Beobachtungskanäle aufweisendes Vergrößerungssystem, insbesondere ein Zoom-System, auf. Ein derartiges Zoom-System ist wahlweise vor oder hinter dem Inverter-System positionierbar. Insbesondere eine Positionierung hinter dem Inverter-System erweist sich als besonders günstig, da in diesem Fall die Präzisionsanforderungen an die Umlenkelemente des Inverter-Systems relativ niedrig sind. Es ist ebenfalls denkbar, das Vergrößerungssystem entlang des senkrecht verlaufenden Strahlenganges zwischen den beiden Mikroskopebenen auszubilden. Durch entsprechende Positionierung des Vergrößerungssystems kann insgesamt die Bauhöhe bzw. die horizontale Baulänge des Mikroskops in gewünschter Weise beeinflusst werden.

Es erweist sich als besonders vorteilhaft, dass wenigstens ein mit einer Brechkraft ausgebildetes Umlenkelement das Inverter-Systems gleichzeitig als Umlenkelement zur Umlenkung von Strahlengängen zwischen den ersten bis dritten optischen Achsen dient. Mittels einer derartigen Mehrfunktionalität der Umlenkelemente kann Bauraum in wirksamer Weise klein gehalten werden.

Das erfindungsgemäße Stereomikroskop weist zweckmäßigerweise eine Auskoppelungsvorrichtung zum Auskoppeln eines Assistentenstrahlenganges von einem Hauptbeobachterstrahlengang auf. Mittels einer derartigen Auskoppelungsvorrichtung, welche beispielsweise als physikalischer oder geometrischer Strahlenteiler ausgebildet sein kann, kann in einfacher Weise ein Hauptbeobachter-Einblick und ein Assistenten-Einblick zur Verfügung gestellt werden.

Gemäß einer weiteren bevorzugten Ausführungsform des erfindungsgemäßen Stereomikroskops sind das Invertersystem und die dem Hauptobjektiv vorgeschaltete Zusatzoptik elektromechanisch miteinander gekoppelt. Hierdurch ist es in einfacher Weise möglich, bei Nicht-Verwendung der Zusatzoptik auch das Invertersystem, d. h. insbesondere die eine Brechkraft aufweisenden Umlenkelemente, aus dem Mikroskop-Strahlengang zu entfernen und durch einfache Umlenkelemente, welche keine Brechkraft aufweisen, zu ersetzen. Die elektromechanische Kopplung sorgt hierbei dafür, dass die gemeinsame Entfernung bzw. Einbringung von Invertersystem und Zusatzoptik aus dem bzw. in den Strahlengang des Mikroskops in besonders einfacher Weise möglich ist.

Die Erfindung wird nun anhand der beigefügten Zeichnung weiter beschrieben.

In dieser zeigt
- Figur 1: eine bevorzugte Ausführungsform eines erfindungsgemäßen Stereomikroskops mit vorgeschaltetem Ophthalmologie-Vorsatz in seitlicher schematischer Schnittansicht und
- Figur 2: das Mikroskop gemäß Figur 1 ohne Ophthalmologie-Vorsatz und entsprechend angepasster Optik.

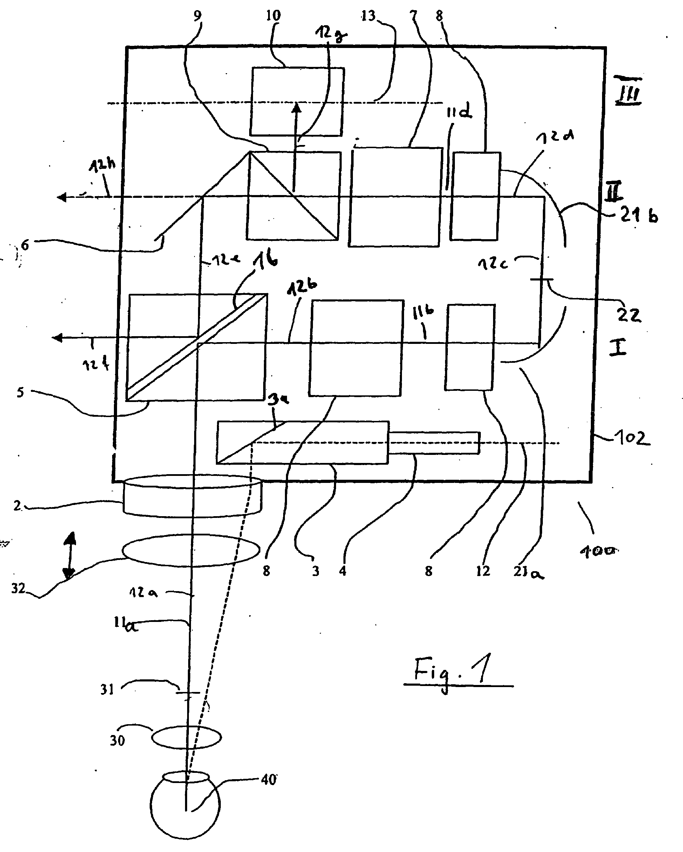

Eine bevorzugte Ausführungsform des erfindungsgemäßen Stereomikroskops ist in Figur 1 insgesamt mit 100 bezeichnet. Das Stereomikroskop weist einen Mikroskopkörper 102 auf, in dem als optische Komponenten zunächst ein Hauptobjektiv 2 und ein insbesondere als Zoom-System ausgebildetes Vergrößerungssystem 7 vorgesehen sind.

Das Mikroskop weist ferner Umlenkelemente 5, 21a, 21b auf. Mittels dieser Umlenkelemente sind von einem zu beobachtenden Objekt 40 ausgehende Beobachtungsstrahlen 12a bis 12h, welche zunächst im wesentlichen (bei 21a) in vertikaler Richtung das Hauptobjektiv 2 entlang dessen optischer Achse, im folgenden als erste optische Achse 11a bezeichnet, durchlaufen, in zwei im wesentlichen horizontal verlaufende Mikroskopebenen I, II umlenkbar (bei 12b, 12d). Man erkennt, dass das Vergrößerungssystem 7 in der dargestellten Ausführungsform in der zweiten Mikroskopebene II angeordnet ist. Die optischen Achsen in der ersten und zweiten Mikroskopebene sind im folgenden als zweite bzw. dritte optische Achse 11b, 11d bezeichnet.

Objektseitig bezüglich des Vergrößerungssystems 7 sind, wahlweise in der ersten und/oder zweiten Mikroskopebene I, II, entlang der jeweiligen optischen Achsen, optische Zusatzkomponenten, hier insgesamt mit 8 bezeichnet, die beispielsweise Filter, Lasershutter, optische Teiler oder Elemente zur Erzeugung von Zwischenabbildungen umfassen, vorgesehen.

Das dargestellte Mikroskop ist zur simultanen Beobachtung des Objekts 40 durch einen Hauptoperateur und einen Assistenten ausgelegt. Zu diesem Zweck ist in der zweiten Mikroskopebene II ein Umlenkelement bzw. eine Auskoppelungseinrichtung 9 vorgesehen, welche die Auskoppelung des Beobachtungsstrahlenganges 12g für den Assistenten bezüglich des Beobachtungsstrahlenganges 12d für den Hauptoperateur bewirkt. Die Beobachtung des Objekts 40 durch den Assistenten erfolgt in einer dritten Mikroskopebene III.

Die stereoskopische Aufspaltung des das Hauptobjektiv 2 beaufschlagenden (einheitlichen) Strahlengangs 12a kann in an sich bekannter Weise an beliebiger Stelle innerhalb des Mikroskopgehäuses 102 erfolgen. Zweckmäßigerweise erfolgt die stereoskopische Aufspaltung mittels des Vergrößerungssystems 7, welches beispielsweise zwei oder vier stereoskopische Beobachtungskanäle aufweisen kann. Es ist ebenfalls denkbar, das Vergrößerungssystem 7 mit vier jeweils paarweise stereoskopischen Beobachtungskanälen auszubilden, wobei dann jeweils ein Paar stereoskopischer Beobachtungskanäle für den Hauptoperateur bzw. den Assistenten vorgesehen ist.

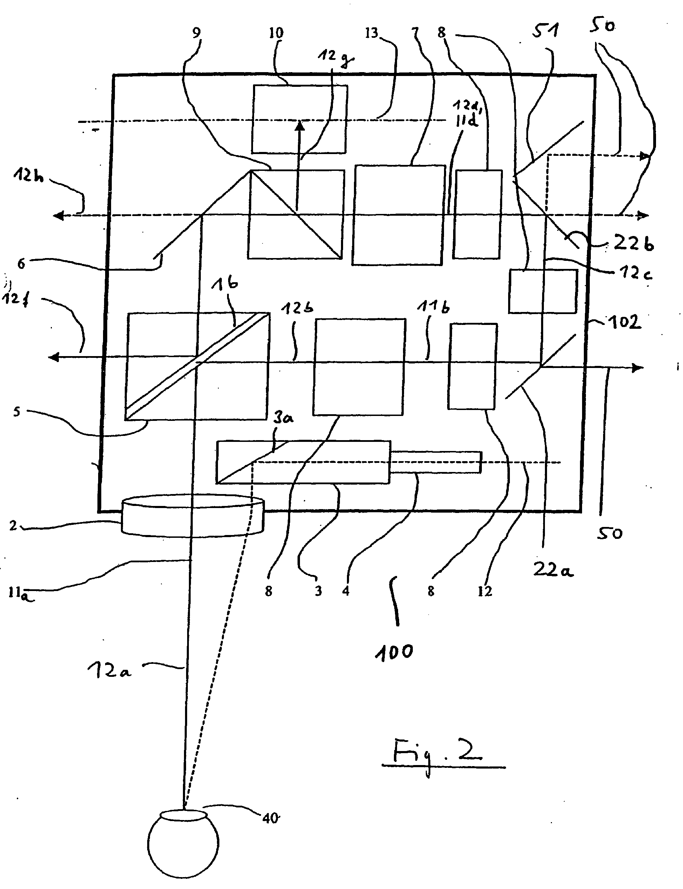

Das Vorsehen von vier Vergrößerungskanälen im Rahmen des Vergrößerungssystems ermöglicht die Realisierung eines geringen vertikalen Abstandes zwischen jeweiliger Beobachtungsachse und dem zu beobachtenden Objekt sowohl für den Hauptoperateur als auch den Assistenten. Zweckmäßigerweise verlaufen zwei Vergrößerungskanäle des Vergrößerungssystems, insbesondere die Vergrößerungskanäle für den Hauptoperateur, horizontal auf gleicher Höhe, wobei zwei weitere Vergrößerungskanäle parallel hierzu, d. h. ebenfalls horizontal, mit einer vertikalen Beabstandung zu einander verlaufen. Diese Vergrößerungskanäle mit vertikaler Beabstandung sind insbesondere für den Assistenten nutzbar. Hierbei ist es insbesondere möglich, dass die vertikal beabstandeten Vergrößerungskanäle oberhalb bzw. unterhalb des Mittelpunkts der Verbindungslinie zwischen den auf gleicher Höhe ausgebildeten Vergrößerungskanälen für den Hauptoperateur verlaufen. Hierdurch ist eine besonders dichte Packung der vier Vergrößerungskanäle gegeben, wodurch eine besonders geringe Bauhöhe des erfindungsgemäßen Stereomikroskops realisierbar ist. In den Figuren 1 und 2 sind, aus Gründen der Anschaulichkeit, lediglich einfache Beobachtungsstrahlengänge dargestellt. Insbesondere ist der Beobachtungsstrahlengang in der zweiten Mikroskopebene II mit 12d bezeichnet. Es sei zur Erläuterung angemerkt, dass die zwei Beobachtungsstrahlengänge für den Hauptoperateur in der Beobachtungsrichtung der Figuren 1 und 2 hinter einander liegen, so dass lediglich einer dieser Beobachtungsstrahlengänge darstellbar ist. Die vertikal beabstandeten Beobachtungsstrahlengänge in der zweiten Mikroskopebene, welche an dem Umlenkelement 9 in die dritte Mikroskopebene III abgelenkt werden, sind nicht im einzelnen dargestellt. Auch der vertikal verlaufende Beobachtungsstrahlengang 12g stellt bezüglich der bevorzugten Ausführungsform des Vergrößerungssystems 7 lediglich eine schematische Vereinfachung dar, da tatsächlich bei dieser Ausführungsform in der Darstellung der Figuren 1 und 2 insgesamt zwei nebeneinander vertikal verlaufende Beobachtungsstrahlengänge in die dritte Mikroskopebene abgelenkt werden. Eine vollständige Darstellung dieser bevorzugten Ausführungsform eines Vergrößerungssystems ist in der DE 102 55 960 offenbart, auf die hiermit Bezug genommen wird.

Mittels (nicht dargestellter) Binokulartuben ist anschließend an die Auskopplungseinrichtung 9 eine stereoskopische Beobachtung des Objekts 40 durch den Hauptoperateur bzw. den Assistenten möglich.

Zweckmäßigerweise ist zur weiteren Umlenkung der stereoskopischen Beobachtungsstrahlengänge für den Hauptoperateur hinter der Auskopplungseinrichtung 9 ein weiteres Umlenkelement 6 vorgesehen, mittels dessen die (stereoskopischen) Beobachtungsstrahlengänge (bei 12e) für den Hauptoperateur von der zweiten Mikroskopebene II beispielsweise zurück in die erste Mikroskopebene I ablenkbar sind. In der ersten Mikroskopebene I ist ein weiteres Umlenkelement 16 vorgesehen, mittels dessen die Beobachtungsstrahlengänge für den Hauptoperateur wieder im wesentlichen in eine horizontale Richtung abgelenkt werden. Die Strahlengänge zu einem (nicht dargestellten) Binokulartubus in der Mikroskopebene I sind mit 12f bezeichnet.

Ist hingegen eine Beobachtung des Objektivs 40 durch den Hauptoperateur in der zweiten Mikroskopebene II gewünscht, kann auf das Umlenkelement 6 verzichtet werden, bzw. kann dieses halbdurchlässig oder verschiebbar ausgebildet sein. In diesem Fall ergeben sich die mit 12h bezeichneten Beobachtungsstrahlengänge für den Hauptoperateur.

Für den Assistenten ist in der dritten Mikroskopebene III ein weiteres Umlenkelement 10 vorgesehen, mittels dessen die durch die Auskopplungseinrichtung 9 ausgekoppelten (im wesentlichen vertikal verlaufenden) Strahlengänge 12g in die dritte Mikroskopebene (d. h. im wesentlichen in eine horizontale Richtung) ablenkbar sind. Das Umlenkelement 10 ist zweckmäßigerweise je nach Orientierung der Assistenten-Beobachtungsstrahlengänge um eine Achse 13 oder eine zu dieser Achse senkrecht verlaufende Achse verschwenkbar, so dass ein Assistenteneinblick über den (nicht dargestellten) Assistenten-Binokulartubus im dargestellten Beispiel in die Zeichenebene hinein, oder aus der Zeichenebene heraus möglich ist.

Ein Beleuchtungssystem des dargestellten Mikroskops ist insgesamt mit 3, 4 bezeichnet, wobei mit 4 ein Faserkabel für eine Beleuchtungseinrichtung 3 bezeichnet ist. Über ein Umlenkelement 3a wird Licht aus dem Faserkabel 4 in einem gewünschten Winkel auf das zu beleuchtende Objekt 40 aufgebracht. Die optische Achse des Faserkabels 4 ist mit 12 bezeichnet.

Das Mikroskop 100 ist ferner mit einer Zusatzoptik 30, 32 ausgestattet, welche die Durchführung intraokularer Chirurgie ermöglicht.

Die Zusatzoptik weist eine Ophthalmoskopierlinse bzw. Funduslinse 30 und eine Korrekturlinse 32 auf. Die Ophthalmoskopierlinse 30 dient zur optischen Kompensation der Brechkraft des Auges.

Da die Ophthalmoskopierlinse 30 und die Korrekturlinse 32 bei intraokularer Chirurgie gemeinsam verwendet werden, sind sie zweckmäßigerweise mittels eines nicht dargestellten Verschwenkmechanismus aus dem Strahlengang 12a zwischen Objekt 40 und Hauptobjektiv 2 bzw. der optischen Achse 11a des Hauptobjektivs 2 heraus verschwenkbar. Durch diese Verschwenkbarkeit ist gewährleistet, daß das Mikroskop 100 auch für andere chirurgische Eingriffe, welche keine derartige Zusatzoptik benötigen, eingesetzt werden kann.

Zur Funktionsweise der Zusatzoptik sei zunächst ausgeführt, dass die Ophthalmoskopierlinse 30 eine erste Zwischenabbildung 31 des Objekts 40 vor dem Hauptobjektiv 2 des Mikroskops 100 erzeugt. Das durch die Ophthalmoskopierlinse 30 erzeugte Bild 31 ist höhen- und seitenverkehrt (pseudostereoskopisch). Die Korrekturlinse 32 ist zweckmäßigerweise entlang der optischen Achse 11a verschiebbar ausgebildet, wie mittels Doppelpfeils angedeutet ist. Durch Verschiebung der Korrekturlinse 32 ist es beispielsweise möglich, auf einen interessierenden Abschnitt des Objektes bzw. Auges 40 zu fokussieren, ohne an den optischen Systemen im Gehäuse 102 Einstellungen vornehmen zu müssen.

Das Zwischenbild 31, wie erwähnt, ist seitenverkehrt und höhenverkehrt bzw. pseudostereoskopisch. Zur Bereitstellung eines höhen- und seitenrichtigen Bildes sind die Umlenkelemente 21a, 21b als Hohlspiegel (Spiegel mit einem von ∞ abweichenden Radius) ausgebildet. Im Einzelnen ergibt sich folgende Beobachtungsstrahlpropagierung: Die aus dem höhen- und seitenverkehrten Zwischenbild 31 resultierenden Strahlengänge werden mittels der Korrektur- bzw. Hilfslinse 32 oder gegebenenfalls (nach Umlenkung am Umlenkelement 5) der optischen Zusatzkomponenten 8 in einen im wesentlichen achsparallelen Strahlengang entlang der optischen Achse 11b der ersten Mikroskopebene I umgewandelt. Dieser achsparallele Strahlengang wird mittels des Hohlspiegels 21a in eine weitere Zwischenabbildung 22 im vertikalen Strahlengang 12c zwischen den beiden Mikroskopebenen I, II abgelenkt. Diese Zwischenabbildung 22 ist seitenrichtig und höhenrichtig bzw. stereoskopisch. Diese Zwischenabbildung 22 wird dann mittels des Hohlspiegels 21b in der zweiten Mikroskopebene II wieder ins Unendliche abgebildet (im wesentlichen achsparalleler Strahlengang). Entlang der dritten optischen Achse 11d befindet sich das vorzugsweise als vierkanaliges Zoom-System ausgebildete Vergrößerungssystem 7, wodurch, wie bereits erwähnt die stereoskopische Aufspaltung für den Hauptoperateur und Assistenten stattfindet. Es sei an dieser Stelle noch einmal auf die Doppelfunktionalität der Umlenkelemente 21a, 21b verwiesen. Einerseits dienen sie zur Umlenkung der Strahlengänge und somit zur optimalen Raumausnutzung innerhalb des Mikroskopkörpers 102, andererseits zur Invertierung eines pseudostereoskopischen Zwischenbildes, wodurch die Anzahl der optischen Komponenten gegenüber herkömmlichen Lösungen reduzierbar ist.

Die Umlenkelemente 21a, 21b dienen also jeweils sowohl zur Umlenkung der Beobachtungsstrahlengänge innerhalb des Mikroskopgehäuses als auch zur Bilderzeugung bzw. zur Abbildung ins unendliche, wodurch in einfacher und preiswerter Weise eine Bildaufrichtung einer invertierten, pseudo-stereoskopischen Zwischenabbildung zur Verfügung gestellt ist.

Erfindungsgemäß ist es also möglich, herkömmlich verwendete SDI-Systeme, welche relativ komplexe Prismen- und Planspiegelsysteme aufweisen, durch einfache Hohlspiegel 21a, 21b zu ersetzen. Es ist ebenfalls denkbar, die durch die Hohlspiegel 21a, 21b bereitgestellte Doppelfunktionalität mittels mit einer Brechkraft ausgebildeter Umlenkprismen bereit zu stellen. Es wäre ebenfalls denkbar, anstelle des Umlenkelements 21a oder 21b das Umlenkelement 5 mit einer Brechkraft auszubilden. Hierdurch würde das invertierte Zwischenbild der ersten Mikroskopebene I erzeugt werden.

Soll das Mikroskop 100 ohne den Ophthalmoskopiervorsatz 30, 32 verwendet werden, ist dieser, aus dem Strahlengang 12a entfernbar, insbesondere herausschwenkbar. Ein entsprechender Verstellmechanismus, welcher manuell oder motorisch ausgebildet sein kann, ist nicht im einzelnen dargestellt.

In diesem Fall werden, wie in Figur 2 verdeutlicht, die als Hohlspiegel ausgebildeten Umlenkelemente 21a, 21b aus dem Beobachtungsstrahlengang entfernt (beispielsweise durch Verschwenken) und durch herkömmliche, planare Umlenkspiegel 22a, 22b ersetzt. Im Übrigen entspricht die Konfiguration des Mikroskops gemäß Figur 2 im wesentlichen derjenigen gemäß Figur 1, so dass auf eine nochmalige ausführliche Darstellung verzichtet werden kann. Es sei lediglich angemerkt, dass bei Ersetzen der Hohlspiegel 21a, 21b durch herkömmliche, als Planspiegel ausgebildete Umlenkelemente 22a, 22b weitere Auskoppelungsmöglichkeiten für Strahlengänge gegeben sind, wie sie in Figur 2 insgesamt mit 50 bezeichnet sind. Zu diesem Zwecke können die Umlenkelemente 22a, 22b halbdurchlässig ausgebildet sein, wodurch es zweckmäßig ist, ein weiteres Umlenkelement 51 vorzusehen.

Zweckmäßigerweise sind die Umlenkelemente 21a, 21b bzw. 22a, 22b mit dem Ophthalmoskopier-Vorsatz gekoppelt, so dass es bei Entfernung des Ophthalmoskopier-Vorsatzes aus dem Strahlengang 12a automatisch bzw. motorisch zu einem Ersetzen der Umlenkelemente 21a, 21b durch die Umlenkelemente 22a, 22b kommt und umgekehrt.

Schließlich sei darauf hingewiesen, dass es möglich ist, an der Stelle der Umlenkelemente 6 oder 51 Dateneinspiegelungen vorzunehmen. An diesen Stellen ist es auch günstig, einen optischen Strahlenteiler, beispielsweise für eine Dokumentationseinrichtung, einzusetzen.

### Bezugszeichenliste

- 2: Hauptobjektiv
- 3: Beleuchtungseinrichtung
- 3a: Umlenkelement der Beleuchtungseinrichtung
- 4: Faserkabel
- 5, 6: Umlenkelemente
- 7: Vergrößerungssystem (Zoom-System)
- 8: optische Zusatzkomponenten
- 9: Umlenkelement (Auskoppelungseinrichtung)
- 10: Umlenkelement
- 11a,11b,11d: optische Achsen
- 12: optische Achse des Faserkabels
- 12a-h: Beobachtungsstrahlen
- 13: Drehachse des Umlenkelement 10
- 16: Umlenkelement
- 21a, 21b: Umlenkelemente (Hohlspiegel)
- 22a, 22b: Umlenkelemente (Planspiegel)
- 22: Zwischenabbildung
- 30: Ophthalmoskopierlinse (Funduslinse)
- 31: Zwischenabbildung
- 32: Korrekturlinse
- 40: Objekt
- 50: ausgekoppelte Strahlengänge
- 51: Umlenkelement
- 100: Stereomikroskop
- 102: Mikroskopkörper (Gehäuse)
- I, II, III: Mikroskopebenen

## Patentansprüche

1. Stereomikroskop mit einem optischen Inverter-System (21a, 21b) zur Aufrichtung und Beobachtungsstrahlvertauschung eines pseudo-stereoskopischen Bildes,
**dadurch gekennzeichnet, dass**
das Inverter-System wenigstens ein mit einer Brechkraft ausgebildetes Umlenkelement (21a, 21b) aufweist, wobei das Invertersystem einem eine erste optische Achse (11a) definierenden Hauptobjektiv (2) nachgeordnet ist.

2. Stereomikroskop nach Anspruch 1, **dadurch gekennzeichnet, dass** das Inverter-System zwei mit einer Brechkraft ausgebildete Umlenkelemente (21a, 21b) aufweist.

3. Stereomikroskop nach einem der Ansprüche 1 oder 2, **dadurch gekennzeichnet, dass** wenigstens ein Umlenkelement (21a, 21b) als Hohlspiegel ausgebildet ist.

4. Stereomikroskop nach einem der vorstehenden Ansprüche, **dadurch gekennzeichnet, dass** es Umlenkelemente (5, 21a, 21b) zum Umlenken eines parallel zu der optischen Achse (11a) verlaufenden Strahlenganges entlang einer zweiten optischen Achse (11b) in einer ersten Mikroskopebene I, welche sich in einem Winkel, insbesondere im wesentlichen senkrecht zu der ersten optischen Achse (11a) erstreckt und anschließend entlang einer dritten optischen Achse (11d) in eine zweite Mikroskopebene II, welche sich im wesentlichen parallel zu der ersten Mikroskopebene I oberhalb von dieser erstreckt, aufweist.

5. Stereomikroskop nach einem der vorstehenden Ansprüche, **dadurch gekennzeichnet, dass** dieses ein in der ersten oder zweiten Mikroskopebene entlang der zweiten bzw. dritten optischen Achse ausgebildetes, wenigstens zwei stereoskopische Beobachtungskanäle umfassendes Vergrößerungssystem, insbesondere ein Zoom-System (7), aufweist.

6. Stereomikroskop nach einem der vorstehenden Ansprüche, **dadurch gekennzeichnet, dass** das wenigstens ein mit einer Brechkraft ausgebildete Umlenkelement (21a, 21b) gleichzeitig als Umlenkelement zur Umlenkung von Strahlengängen zwischen den ersten, zweiten und/oder dritten optischen Achsen (11a, 11b, 11d) dient.

7. Stereomikroskop nach einem der vorstehenden Ansprüche **gekennzeichnet durch** eine Auskoppelungsvorrichtung zum Auskoppeln eines Assistentenstrahlengangs von einem Hauptbeobachterstrahlengang.

8. Stereomikroskop nach ein dem der vorstehenden Ansprüche, **gekennzeichnet durch** eine eine Ophthalmoskopierlinse (30) und eine Korrekturlinse (32) umfassende Zusatzoptik, welche dem Hauptobjektiv (2) vorgeschaltet ist, aufweist.

9. Stereomikroskop nach einem der vorstehenden Ansprüche, **dadurch gekennzeichnet, dass** das Invertersystem und die dem Hauptobjektiv vorgeschaltete Zusatzoptik elektromechanisch miteinander gekoppelt sind.

## Claims

1. Stereomicroscope with an optical inverter system (21a, 21b) for erection and viewing beam inversion of a pseudo-stereoscopic image, **characterised in that** the inverter system comprises at least one deflection element (21a, 21b) with a refractive power, wherein the inverter system is arranged behind a main objective (2) defining an optical axis (11a).

2. Stereomicroscope according to claim 1, **characterised in that** the inverter system comprises two deflection elements (21a, 21b) with a refractive power.

3. Stereomicroscope according to any one of claims 1 or 2, **characterised in that** at least one deflection element (21a, 21b) comprises a concave mirror.

4. Stereomicroscope according to any one of the preceding claims, **characterised in that** it comprises deflection elements (5, 21a, 21b) for deflecting a beam extending in parallel to the optical axis (11a) along a second optical axis (11b) in a first microscope plane I, which extends in an angle, especially an essentially right angle, to the first optical axis (11a), and subsequently along a third optical axis (11d) into a second microscope plane II, which extends essentially parallel to the first microscope plane above this.

5. Stereomicroscope according to any one of the preceding claims, **characterised in that** it comprises a magnification system, especially a zoom-system (7), in the first or second microscope plane extending along the second or third optical axis respectively, and comprising two stereoscopic viewing channels.

6. Stereomicroscope according to any one of the preceding claims, **characterised in that** at least one deflection element (21a, 21b) with a refractive power at the same time serves as deflection element for deflecting beams between the first, second and/or third optical axes (11a, 11b, 11d).

7. Stereomicroscope according to any one of the preceding claims, **characterised by** a decoupling device for decoupling an assistant viewing beam with respect to a main observer viewing beam.

8. Stereomicroscope according to any one of the preceding claims, **characterised by** an additional optical system comprising an ophthalmoscopic lens (30) and a correction lens (32), which is provided in front of the main objective (2).

9. Stereomicroscope according to any one of the preceding claims, **characterised in that** the inverter system and the additional optical system in front of the main objective are coupled in an electromechanical manner.

## Revendications

1. Stéréomicroscope avec un système inverseur (21a, 21b) optique pour redresser et permuter des rayons d'observation d'une image pseudo-stéréoscopique,
**caractérisé en ce que**
le système inverseur présente au moins un élément de déflexion (21a, 21b) réalisé avec un pouvoir réfringent, le système inverseur étant agencé en aval d'un objectif principal (2) définissant un premier axe optique (11a).

2. Stéréomicroscope selon la revendication 1, **caractérisé en ce que** le système inverseur présente deux éléments de déflexion (21a, 21b) réalisés avec un pouvoir réfringent.

3. Stéréomicroscope selon l'une des revendications 1 ou 2, **caractérisé en ce qu'**au moins un élément de déflexion (21a, 21b) est réalisé sous forme de miroir concave.

4. Stéréomicroscope selon l'une des revendications précédentes, **caractérisé en ce qu'**il présente des éléments de déflexion (5, 21a, 21b) pour défléchir une trajectoire de faisceau s'étendant parallèlement à l'axe optique (11a) le long d'un deuxième axe optique (11b) dans un premier plan de microscope I, lequel s'étend sous un angle, en particulier sensiblement perpendiculairement au premier axe optique (11a) et ensuite le long d'un troisième axe optique (11d) dans un deuxième plan de microscope II qui s'étend sensiblement parallèlement au premier plan de microscope I au-dessus de celui-ci.

5. Stéréomicroscope selon l'une des revendications précédentes, **caractérisé en ce que** celui-ci présente un système d'agrandissement, en particulier un système de zoom (7) comprenant au moins deux canaux d'observation, réalisé dans le premier ou dans le deuxième plan de microscope le long du deuxième ou du troisième axe optique.

6. Stéréomicroscope selon l'une des revendications précédentes, **caractérisé en ce que** ledit au moins un élément de déflexion (21a, 21b) réalisé avec un pouvoir réfringent sert simultanément d'élément de déflexion pour défléchir des trajectoires de rayons entre les premier, deuxième et/ou troisième axes optiques (11a, 11b, 11d).

7. Stéréomicroscope selon l'une des revendications précédentes, **caractérisé par** un dispositif de découplage pour découpler une trajectoire de rayons d'assistance vis-à-vis d'une trajectoire de rayons d'observation principale.

8. Stéréomicroscope selon l'une des revendications précédentes, **caractérisé par** un système optique additionnel, comprenant une lentille ophtalmoscopique (30) et une lentille de correction (32), qui est monté en avant de l'objectif principal (2).

9. Stéréomicroscope selon l'une des revendications précédentes, **caractérisé en ce que** le système inverseur et le système optique additionnel monté en avant de l'objectif principal sont couplés l'un à l'autre par voie électromécanique.
